# EUROPÄISCHE PATENTSCHRIFT

(11) **EP 4 025 369 B1**
(45) Veröffentlichungstag und Bekanntmachung des Hinweises auf die Patenterteilung: **24.01.2024**
(21) Anmeldenummer: 20743651.0
(22) Anmeldetag: 17.07.2020
(51) Int. Cl.: B23G 5/20

(54) **VERFAHREN ZUR ERZEUGUNG EINER WERKSTÜCK-GEWINDEBOHRUNG**
METHOD FOR PRODUCING A WORKPIECE TAPPED HOLE
PROCÉDÉ POUR GÉNÉRER UN TROU TARAUDÉ DANS UNE PIÈCE

(30) Priorität: 04.09.2019 DE 102019123625
(43) Veröffentlichungstag der Anmeldung: 13.07.2022
(73) Patentinhaber: Audi AG, 85045 Ingolstadt (DE)
(72) Erfinder: KOPTON, Peter, 85092 Kösching (DE)
(86) Internationale Anmeldenummer: PCT/EP2020/070280
(87) Internationale Veröffentlichungsnummer: WO 2021/043488

(56) Entgegenhaltungen:
- WO-A1-87/05546
- WO-A1-2008/088264
- DE-U1-202005 012 562
- US-A- 5 413 438

## Beschreibung

Die Erfindung betrifft ein Verfahren zur Erzeugung einer Werkstück-Gewindebohrung gemäß dem Oberbegriff des Patentanspruchs 1. Ein derartiges Verfahren geht beispielsweise aus der US 5 413 438 A hervor.

In einem sogenannten Einschuss-Gewindebohr-Prozess wird mit einem Einschuss-Gewindebohr-Werkzeug sowohl eine Vorbohrung (das heißt Kernbohrung) als auch eine Innengewinde-Erzeugung in einem gemeinsamen Werkzeughub durchgeführt. Hierzu weist das Einschuss-Gewinde-BohrWerkzeug zumindest eine Vorbohr-Schneide und einen Werkzeug-Gewindeerzeugungsabschnitt mit zumindest einem Profilierzahn auf. In dem Verfahren erfolgen zunächst ein Bohrhub, bei dem das rotierende Gewindebohr-Werkzeug in das nicht vorgebohrte Werkstück bis zu einer Soll-Bohrtiefe eingetrieben wird. Anschließend erfolgt ein dazu gegenläufiger Reversierhub, bei dem das Gewindebohr-Werkzeug im Wesentlichen belastungsfrei aus der Gewindebohrung herausführbar ist.

Im Stand der Technik (zum Beispiel WO 2019/029850 A1) wird das Innengewinde gleichzeitig mit Durchführung des Bohrhubs erzeugt. Am Ende des Gewinde-Bohrhubs erfolgt eine Drehrichtungsumkehr des rotierenden Werkzeugs. Anschließend wird das Werkzeug im Reversierhub belastungsfrei aus der Gewindebohrung herausgeführt.

Aus der US 5 413 438 A ist ein Gewindebohr-Werkzeug bekannt, mit dem eine Werkstück-Gewindebohrung mit Innengewinde erzeugbar ist.

Die Aufgabe der Erfindung besteht darin, ein Gewindebohr-Werkzeug sowie ein Verfahren zur Erzeugung einer Gewindebohrung in einem Werkstück bereitzustellen, bei dem im Vergleich zum Stand der Technik die Werkzeugbelastung reduziert ist und die Gewindebohrung in reduzierter Prozesszeit erzeugt werden kann.

Die Aufgabe ist durch die Merkmale des Anspruches 1 gelöst. Bevorzugte Weiterbildungen der Erfindung sind in den Unteransprüchen offenbart.

In Abkehr vom obigen Stand der Technik wird erfindungsgemäß im Bohrhub nicht mehr sowohl die Vorbohrung als auch gleichzeitig das Innengewinde erzeugt. Vielmehr ist in der Erfindung das Gewindebohr-Werkzeug so ausgelegt, dass im Bohrhub alleine die Vorbohrung erfolgt. Im anschließenden Reversier-Gewindehub wird dann das Innengewinde erzeugt. Sowohl der Bohrhub als auch der Reversier-Gewindehub wird bevorzugt bei gleichsinniger Werkzeug-Drehbewegung durchgeführt. Das heißt, dass eine prozesstechnisch aufwendige und zeitlich aufwendige Drehrichtungsumkehr beim Wechsel vom Bohrhub zum Reversier-Gewindehub wegfällt. Der Reversier-Gewindehub wird mit einem Reversiervorschub und einer damit synchronisierten Werkzeug-Drehzahl durchgeführt, wodurch das Gewindebohr-Werkzeug unter Bildung des Innengewindes aus der Gewindebohrung herausgeführt wird.

Das Gewindebohr-Werkzeug ist so ausgelegt, dass im Bohrhub ein Werkzeug-Gewindeerzeugungsabschnitt (zur Innengewinde-Erzeugung erforderlich) belastungsfrei sowie außer Eingriff mit der Vorbohrungswand bleibt. Im anschließenden Reversier-Gewindehub bleibt dagegen der Werkzeug-Bohrabschnitt (zur Erzeugung der Vorbohrung erforderlich) belastungsfrei sowie außer Eingriff mit dem erzeugten Innengewinde. Der Werkzeug-Bohrabschnitt bewegt sich im Reversier-Gewindehub mit seinen Bohrschneiden radial innerhalb des radial inneren Gewinde-Scheitels des Innengewindes. Der Reversier-Gewindehub erfolgt bei einer zur Bohrungs-Achse achsparallelen Werkzeug-Achse.

Am Bohrhub-Ende wird zur Vorbereitung des Reversier-Gewindehubs ein Freifahrschnitt durchgeführt. Im Freifahrschnitt wird das rotierende Gewindebohr-Werkzeug um einen Radialversatz radial ausgesteuert und in einer Zirkular-Drehbewegung entlang einer Kreisbahn um die Bohrungs-Achse geführt.

Das Gewindebohr-Werkzeug weist zumindest eine erste Bohrschneide und eine zweite Bohrschneide auf, die in Werkzeug-Umfangsrichtung um einen Schneidenwinkel voneinander beabstandet sind. Der Schneidenwinkel ist so bemessen, dass die beiden Bohrschneiden im Reversier-Gewindehub belastungsfrei und außer Eingriff mit dem erzeugten Innengewinde aus der Werkstück-Gewindebohrung herausgeführt werden können.

Erfindungsgemäß ist der am Gewindebohr-Werkzeug ausgebildete Gewindeerzeugungsabschnitt in einer Werkzeug-Umfangsrichtung außerhalb des von den beiden Bohrschneiden aufgespannten Drehwinkelbereiches angeordnet.

Eine äußere Schneidenkontur der beiden Bohrschneiden bewegt sich bei einer Werkzeug-Rotation auf einer Bohrschneiden-Kreisbahn. In gleicher Weise bewegt sich bei der Werkzeug-Rotation eine Zahnkontur des Werkzeug-Gewindeerzeugungsabschnitts auf einer Zahnkontur-Kreisbahn mit einem Zahnkontur-Durchmesser. Um einen störkonturfreien Freifahrschnitt des Gewindebohr-Werkzeugs in der Radialrichtung zu unterstützen, ist der Zahnkontur-Durchmesser kleiner ausgelegt als der Schneidenkontur-Durchmesser. Auf diese Weise ergibt sich ein radialer Werkzeug-Freiraum zwischen der Bohrschneiden-Kreisbahn und der Zahnkontur-Kreisbahn. Der Werkzeug-Freiraum wird beim Freifahrschnitt in Radialrichtung teilweise aufgebraucht.

Der zwischen der ersten Bohrschneide und der zweiten Bohrschneide aufgespannte Schneidenwinkel kann rein exemplarisch kleiner als 180° sein und zum Beispiel im Bereich von 120° bemessen sein.

Zusätzlich zu den ersten und zweiten Bohrschneiden kann das Gewindebohr-Werkzeug zumindest eine weitere, dritte Bohrschneide aufweisen, die in der Werkzeug-Umfangsrichtung zwischen den beiden ersten und zweiten Bohrschneiden positionierbar ist.

Jede der Bohrschneiden kann zumindest eine, an der Werkzeugspitze ausgebildete stirnseitige Querschneidkante aufweisen. Die Querschneidkante einer jeden Bohrschneide kann an einer radial äußeren Schneidenecke in eine Längsschneidkante der Bohrschneide übergehen. Zudem kann in einer konkreten Ausführungsvariante jeweils eine Bohrschneide an einem, in der Werkzeug-Längsrichtung verlaufenden Bohrersteg ausgebildet sein. Die beiden Bohrerstege können in der Werkzeug-Umfangsrichtung über Spanräume voneinander beabstandet sein. Eine den Spanraum begrenzende Spanfläche kann (in der Werkzeug-Umfangsrichtung) an der Längsschneidkante in eine umfangsseitige Bohrersteg-Freifläche übergehen. Von jeder der beiden Bohrersteg-Freiflächen können jeweils radial nach außen Führungsfasen abragen. Zudem kann an einem der beiden umfangsseitigen Bohrersteg-Freiflächen der Werkzeug-Gewindeerzeugungsabschnitt ausgebildet sein.

An der Werkzeugspitze des Gewindebohr-Werkzeugs kann eine den Spanraum begrenzende Spanfläche an der stirnseitigen Querschneidkante in eine stirnseitige Freifläche übergehen, die in Richtung auf die Werkzeug-Achse konisch zuläuft. Bevorzugt im Hinblick auf eine gleichmäßige Bohrschneiden-Belastung ist es, wenn die ersten und zweiten Bohrschneiden in der Werkzeug-Axialrichtung in unterschiedlichen Höhenpositionen, das heißt zueinander axial höhenversetzt angeordnet sind. Der axiale Höhenversatz zwischen den beiden Bohrschneiden (insbesondere deren Querschneiden mit zugehöriger Schneidenecke) kann derart bemessen sein, dass die Bohrschneiden-Belastungen pro Bohrschneide im Bohrhub in etwa gleich sind. Bei axial höhenversetzten Bohrschneiden kann eine in etwa gleichmäßige Bohrschneiden-Belastung erzielt werden, und zwar trotz der nicht mit Bezug auf die Werkzeug-Achse diametral gegenüberliegenden Bohrschneiden (wie es in einem herkömmlichen Gewindebohr-Werkzeug der Fall ist), so dass der Zahnvorschub pro Bohrschneide in etwa gleich groß ist. Insbesondere können die beiden stirnseitigen Querschneidkanten der Bohrschneiden in der Werkzeug-Axialrichtung zueinander höhenversetzt sein.

In einer Prozessabfolge wird nach dem Bohrhub der Freifahrschnitt durchgeführt. Zur Vorbereitung des Freifahrschnittes ist es bevorzugt, wenn das sich nach Bohrhub-Ende auf der Soll-Bohrtiefe befindliche Gewindebohr-Werkzeug um einen Axialversatz entgegen der Bohrrichtung zurückgestellt wird. Auf diese Weise wird im Freifahrschnitt eine Kollision der Werkzeugspitze mit dem Bohrungsgrund vermieden.

Im Hinblick auf eine einwandfreie Gewindeerzeugung erfolgen erfindungsgemäß im Reversier-Gewindehub die Werkzeug-Rotation und die Werkzeug-Zirkular-Bewegung in gleichsinniger Drehung sowie bei gleicher Drehzahl. Nachfolgend ist ein Ausführungsbeispiel der Erfindung anhand der beigefügten Figuren beschrieben.

Es zeigen:
- Fig. 1: in einer Seitenschnittdarstellung eine in einem Werkstück ausgebildete Gewindesackloch-Bohrung;
- Fig. 2 und 3: unterschiedliche Ansichten eines Gewindebohr-Werkzeugs;
- Fig. 4 bis 8: jeweils Ansichten, die die Erzeugung des in der Fig. 1 gezeigten Gewindesackloches in einer Prozessabfolge veranschaulichen;
- Fig. 9 und 10: ein konventionelles Bohrwerkzeug in unterschiedlichen Ansichten;
- Fig. 11 bis 14: ein Ausführungsbeispiel des Gewindebohr-Werkzeugs; sowie
- Fig. 15 bis 18: ein weiteres Ausführungsbeispiel des Gewindebohr-Werkzeugs.

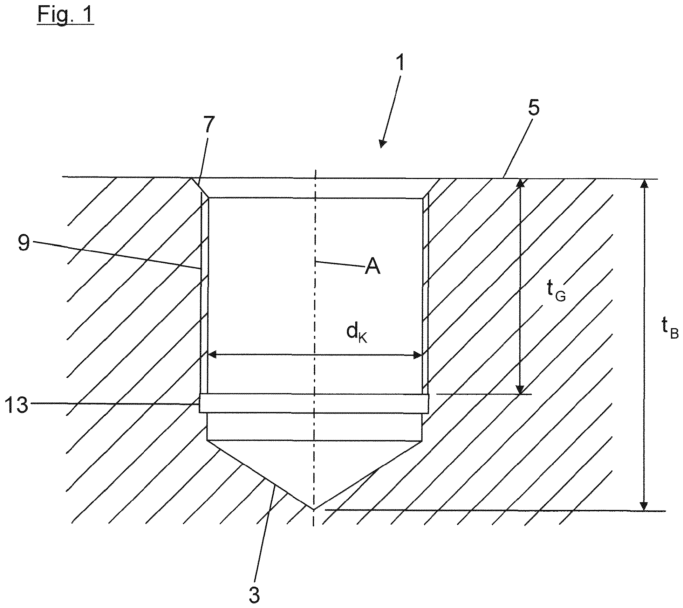

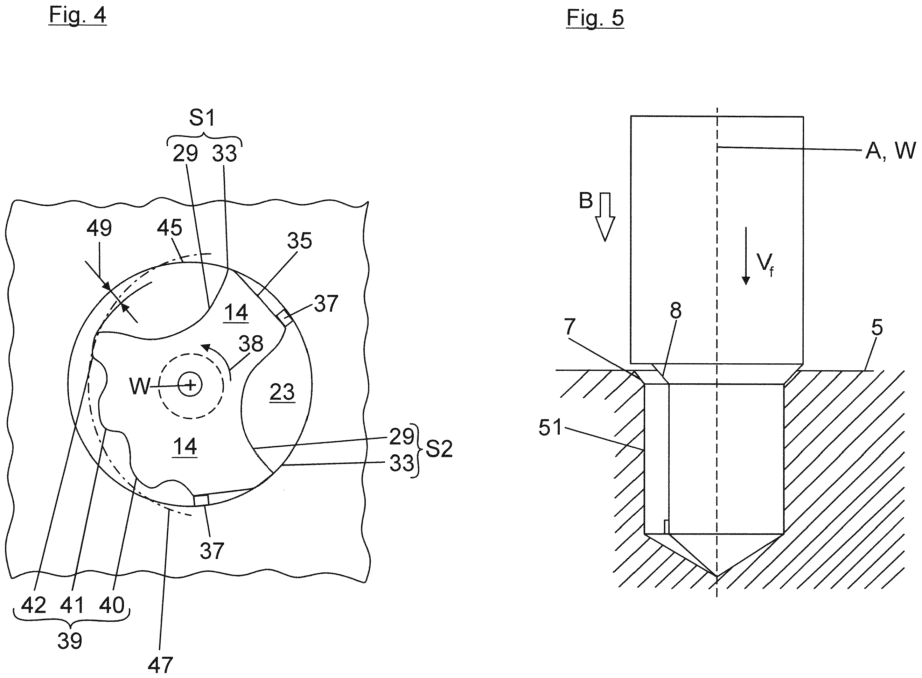

In der Fig. 1 ist eine fertiggestellte Gewindesacklochbohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Fig. 4 bis 8 erläutert wird. Die Gewindebohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Fig. 1 weiter hervorgeht, mündet ein Gewindegang des Innengewindes 9 in einen ringförmig umlaufenden Freigang 13. Die Gewinde-Innenscheitel des Innengewindes 9 liegen in der Fig. 1 auf einem Kerndurchmesser d_{K}.

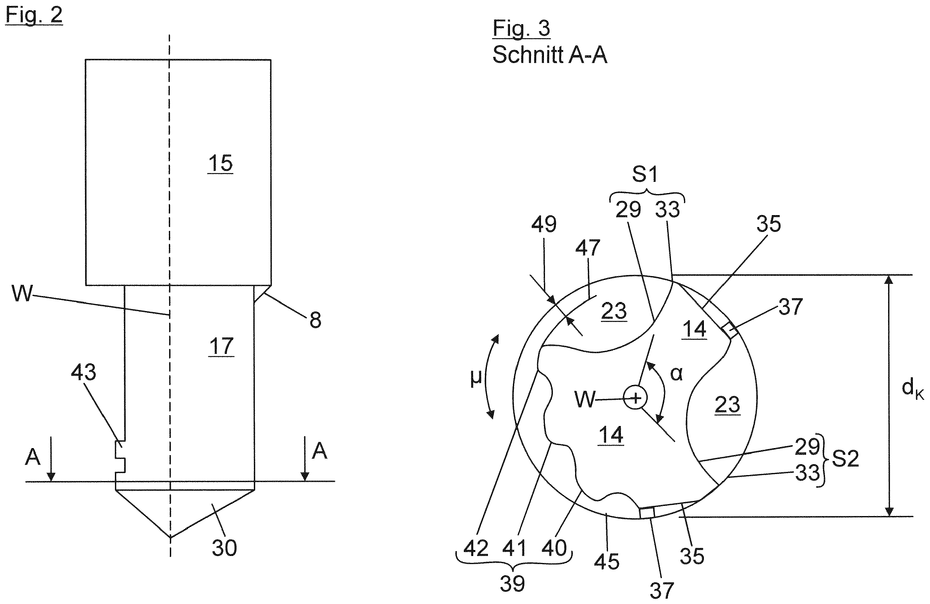

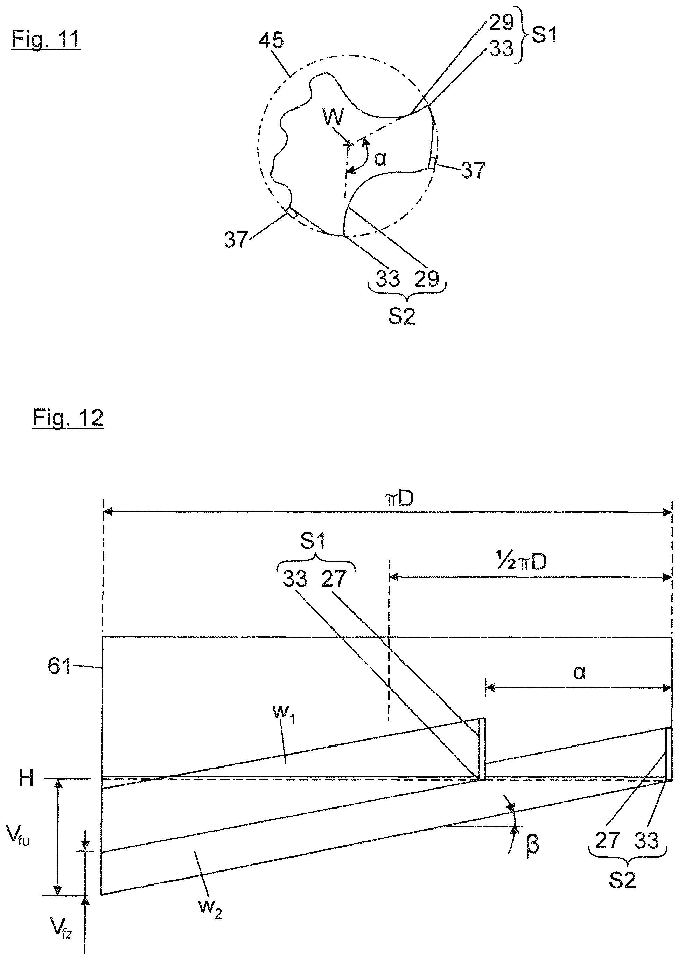

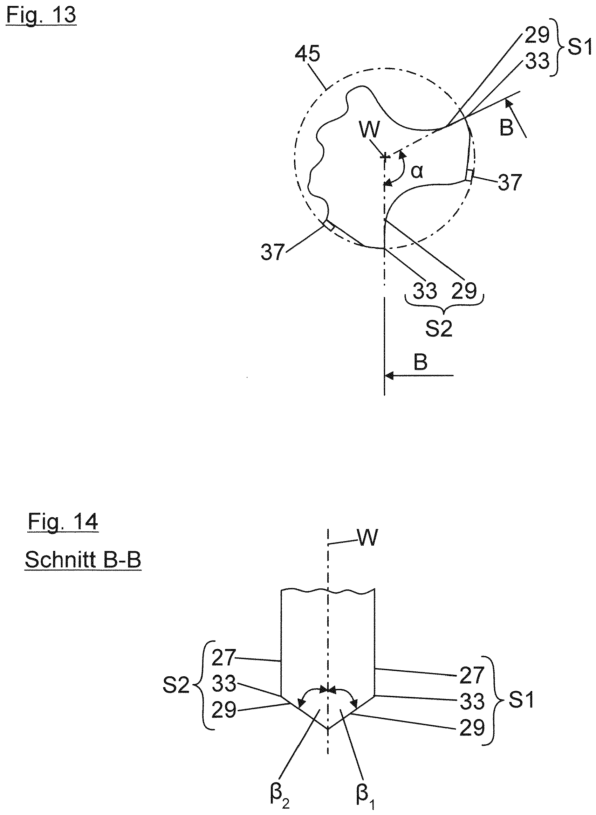

Die in der Fig. 1 gezeigte Gewindesackloch-Bohrung 1 wird mit Hilfe eines nachfolgend anhand der Fig. 2 und 3 beschriebenen Gewindebohr-Werkzeugs hergestellt. Demzufolge weist das Werkzeug in der Fig. 2 einen Spannschaft 15 auf, an dem ein Gewindebohr-Körper 17 anschließt. Am Gewindebohr-Körper 17 sind in der Fig. 3 eine erste Bohrschneide S1 und eine zweite Bohrschneide S2 ausgebildet, die in einer Werkzeug-Umfangsrichtung u um einen Schneidenwinkel α voneinander beabstandet sind. Das Gewindebohr-Werkzeug weist in der Fig. 3 zwei in einer Werkzeug-Längsrichtung verlaufende Bohrerstege 14 auf. An jedem der beiden Bohrerstege 14 ist jeweils eine Bohrschneide S1, S2 ausgebildet. Die beiden Bohrerstege 14 sind in der Werkzeug-Umfangsrichtung u über Spanräume 23 voneinander beabstandet. Jede der Bohrschneiden S1, S2 weist jeweils eine in der Werkzeug-Längsrichtung verlaufende Längschneidkante 27 (nur in den Fig. 12 und 14 angedeutet) und eine an der Werkzeugspitze ausgebildete stirnseitige Querschneidkante 29 auf. Die stirnseitige Querschneidkante 29 geht an einer radial äußeren Schneidenecke 33 in die Längsschneidkante 27 über.

Eine den Spanraum 23 begrenzende Spanfläche geht an der Längsschneidkante 25 in eine umfangsseitige Bohrersteg-Freifläche 35 (Fig. 3) über. An den umfangsseitigen Bohrersteg-Freiflächen 35 sind jeweils seitlich abragende Führungsfasen 37 ausgebildet. Zudem ist am breiten Bohrersteg 14 (und zwar an dessen Bohrersteg-Freifläche 35) ein Werkzeug-Gewindeerzeugungsabschnitt 39 ausgebildet. Dieser besteht in der Fig. 3 aus insgesamt drei Schneidzähnen, nämlich einem Vorschneidzahn 40, einem Zwischenzahn 41 und einem Fertigbearbeitungszahn 42. Alternativ oder zusätzlich können auch weitere Zähne (etwa der in der Fig. 1 gezeigte Zahn 43) vorgesehen werden. Die Zähne 40 bis 42 sind in der Fig. 3 in der Werkzeug-Umfangsrichtung u hintereinander angeordnet sowie in der Axialrichtung in etwa auf gleicher Höhe positioniert. Alternativ dazu ist jedoch der Gewindeerzeugungsabschnitt 39 nicht auf diese spezielle Ausführungsvariante beschränkt. Vielmehr können auch weniger oder mehr Schneidzähne bereitgestellt werden und/oder können die Schneidzähne auch axial zueinander versetzt an den Bohrersteg-Freiflächen 35 angeordnet sein.

Wie aus der Fig. 3 weiter hervorgeht, bewegt sich eine äußere Schneidenkontur der ersten und zweiten Bohrschneiden S1, S2 bei einer Werkzeug-Rotation auf einer Bohrschneiden-Kreisbahn 45 mit einem Schneidenkontur-Durchmesser. In gleicher Weise bewegt sich eine Zahnkontur des Werkzeug-Gewindeerzeugungsabschnitts 39 bei einer Werkzeug-Rotation auf einer Zahnkontur-Kreisbahn bzw. Hüllkurve 47 (Fig. 3 und 4) mit einem Zahnkontur-Durchmesser. In den Fig. 3 oder 4 ist der Zahnkontur-Durchmesser kleiner bemessen als der Schneidenkontur-Durchmesser, wodurch sich ein radialer Werkzeug-Freiraum 49 zwischen der Bohrschneiden-Kreisbahn 45 und der Zahnkontur-Kreisbahn 47 ergibt. Der Werkzeug-Freiraum 49 wird in einem später beschriebenen Freifahrschnitt F benötigt.

Nachfolgend wird anhand der Fig. 4 bis 8 eine Gewindeerzeugung mit Hilfe des Gewindebohr-Werkzeugs beschrieben: So wird in einem Bohrhub B (Fig. 4 und 5) das rotierende Gewindebohr-Werkzeug in das noch nicht vorgebohrte Werkstück 5 bis zu der Soll-Bohrtiefe ts unter Bildung einer Vorbohrung 51 eingetrieben. Im Bohrhub B befinden sich die beiden Bohrschneiden S1, S2 in Spaneingriff mit dem Werkstück 5, während der Werkzeug-Gewindeerzeugungsabschnitt 39 belastungsfrei sowie außer Eingriff mit der Vorbohrungs-Wand bleibt. Die Werkzeug-Achse W ist koaxial zur Bohrungsachse A ausgerichtet, der Vorschub sowie die Drehzahl des Gewindebohr-Werkzeugs sind frei wählbar. Der Bohrvorgang erfolgt bevorzugt linksdrehend in der in der Figur 4 eingezeichneten Drehrichtung 38.

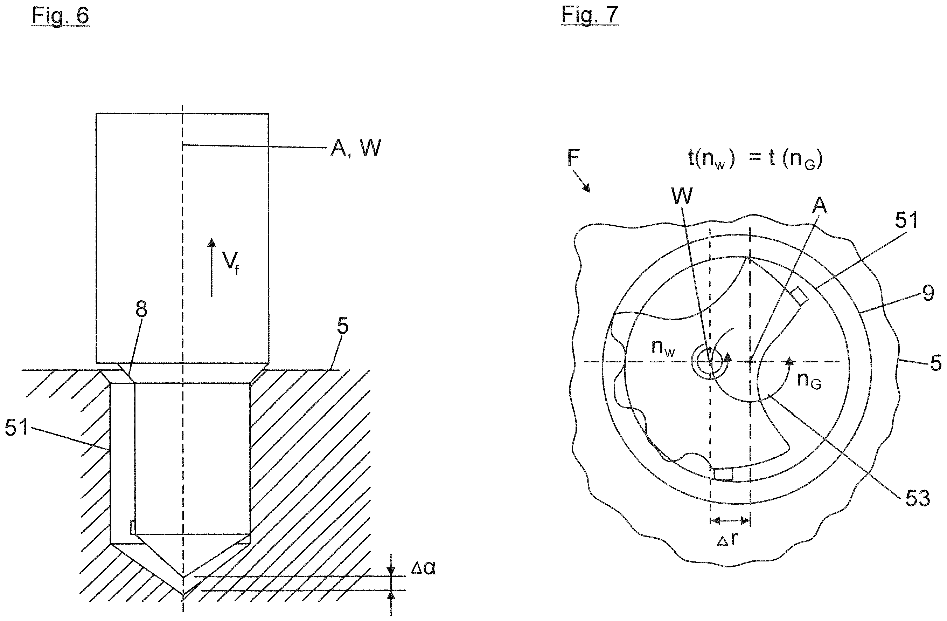

Dem Bohrhub B prozesstechnisch nachgeschaltet ist ein Freifahrschnitt F (Fig. 7). Zur Vorbereitung des Freifahrschnittes F wird das sich nach dem Bohrhub-Ende auf der Soll-Bohrtiefe ts befindliche Gewindebohr-Werkzeug um einen Axialversatz Δa (Fig. 6) entgegen der Bohrrichtung zurückgestellt. Dadurch ist gewährleistet, dass während des Freifahrschnittes F (Fig. 7) eine Kollision der Werkzeugspitze mit dem Bohrungsgrund 3 vermieden wird.

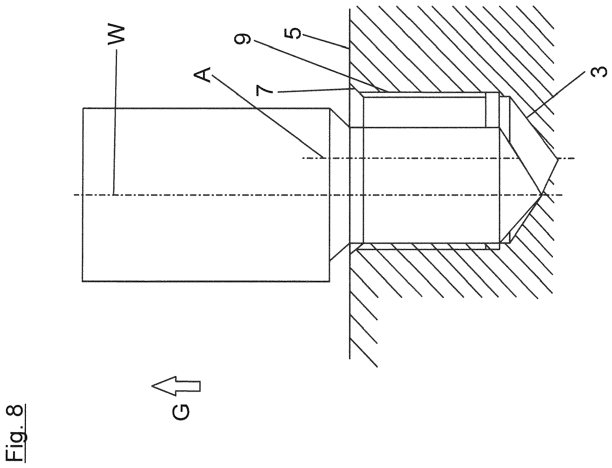

Anschließend erfolgt der Freifahrschnitt F (Fig. 7), bei dem das rotierende Gewindebohr-Werkzeug um einen Radialversatz Δr (Fig. 7) radial ausgesteuert wird und in einer Zirkular-Drehbewegung entlang einer Kreisbahn 53 um die Bohrungsachse A geführt wird. Im Freifahrschnitt F wird ohne Werkzeug-Vorschub der ringförmige Freigang 13 in der Vorbohrungs-Wand erzeugt. Anschließend erfolgt der Reversier-Gewindehub G (Fig. 8), bei dem in gleichsinniger Drehbewegung (das heißt ohne Drehrichtungsumkehr nach dem Bohrhub B) mit einem Reversier-Vorschub und einer damit synchronisierten Drehzahl das Werkzeug unter Bildung des Innengewindes 9 aus der Werkstück-Gewindebohrung 1 herausgeführt wird. Im Reversier-Gewindehub G erfolgen die Werkzeug-Rotation und die Werkzeug-Zirkularbewegung sowohl in gleichsinniger Drehrichtung als auch bei gleicher Drehzahl.

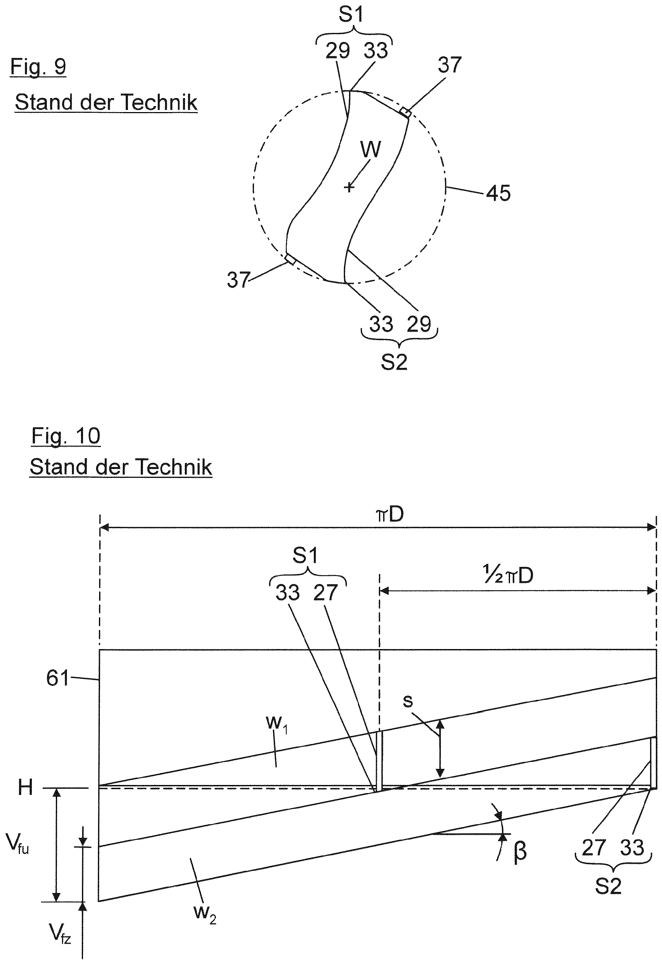

Allgemein sind bei der Auslegung eines Bohr-Prozessschrittes die Prozessparameter (das heißt Drehzahl n sowie Vorschub f des Bohrwerkzeugs) so mit den Positionen der Bohrschneiden S1, S2 am Bohrwerkzeug abzustimmen, dass die Bohrschneiden-Belastung pro Bohrschneide S1, S2 in etwa gleich ist, das heißt der Vorschub v_{fz} (Zahnvorschub) pro Bohrschneide S1, S2 idealerweise gleich ist. Dies wird bei einem konventionellen Bohrwerkzeug (Fig. 9 und 10) durch konstante Teilungsabstände zwischen den Bohrschneiden S1, S2 erzielt. In der Fig. 9 liegen daher die Bohrschneiden S1, S2 mit Bezug auf die Werkzeug-Achse W diametral gegenüber, so dass der Vorschub (Zahnvorschub) pro Bohrschneide S1, S2 in etwa gleich ist, wie es aus der Fig. 10 hervorgeht. In der Fig. 10 ist die Mantelfläche des konventionellen Bohrwerkzeugs in einer Abwicklung gezeigt. Demnach sind die Bohrschneiden S1, S2 auf gleicher axialer Höhe H positioniert. Die Bohrschneiden S1, S2 sind in der Fig. 10 jeweils über identische Schnittbreiten s in Spaneingriff mit der Innenwandung einer Werkstückbohrung. In der Fig. 10 sind die sich im Bohrprozess ergebenden Schnittwege w₁ und w₂ der beiden Bohrschneiden S1, S2 eingezeichnet. Die Schnittwege w₁ und w₂ verlaufen mit einem Steigungswinkel β spiralförmig entlang der Bohrungs-Innenwandung, so dass sich in der Abwicklung (Fig. 10) ein geradliniger Verlauf der Schnittwege w₁ und w₂ ergibt. Die Schnittwege w₁ und w₂ überlappen sich in der Fig. 10 nicht, sondern gehen vielmehr in der Axialrichtung überlappungsfrei ineinander über.

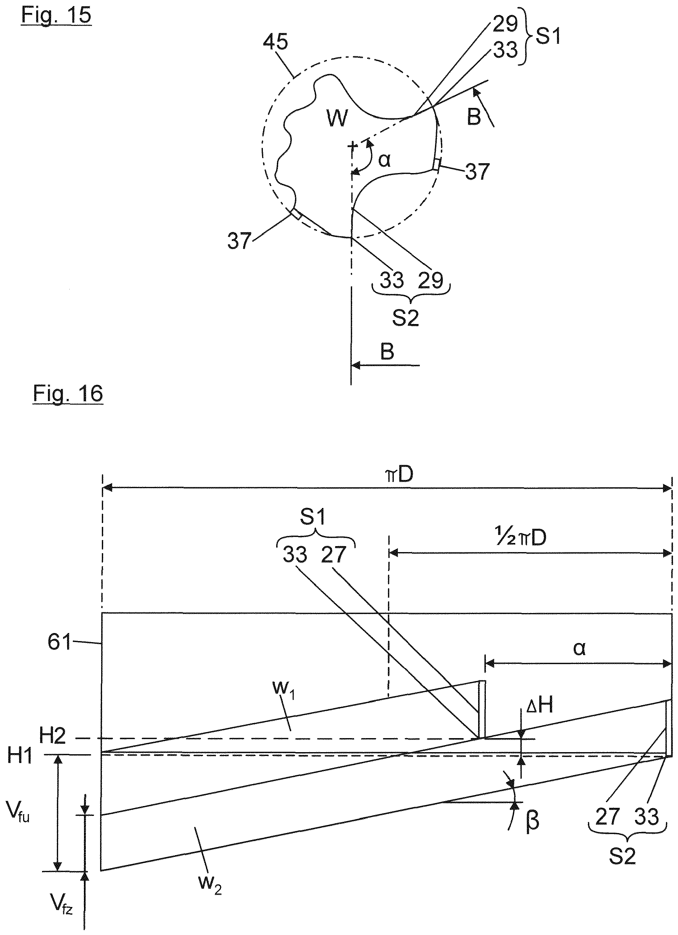

In dem Ausführungsbeispiel der Fig. 11 bis 14 sind - im Unterschied zum Stand der Technik gemäß Fig. 9 und 10 - die Teilungsabstände zwischen den beiden Bohrschneiden S1, S2 nicht mehr identisch, sondern unterschiedlich. Entsprechend ist in der Fig. 12 der Vorschub ffZ pro Bohrschneide nicht mehr für jede Bohrschneide S1, S2 gleich, sondern unterschiedlich. Das heißt, dass in der Fig. 12 die Bohrschneiden S1, S2 im Bohrprozess nicht mehr gleichmäßig, sondern unterschiedlich belastet sind. Gemäß der Fig. 12 ist der ersten Bohrschneide S1 der größte Vorschub v_{fz} pro Bohrschneide zugeordnet, das heißt die erste Bohrschneide S1 ist der größeren Schneidenbelastung ausgesetzt. In der Fig.12 sind die beiden Bohrschneiden S1, S2 ohne axialem Höhenversatz ΔH auf gleicher Höhe H positioniert. Gemäß der Fig. 13 und 14 spannt jede Querschneidkante 29 jeder Bohrschneide S1, S2 mit der Werkzeugachse W einen Spitzenwinkel β₁, β₂ auf. Die Spitzenwinkel β₁, β₂ der beiden Bohrschneiden S1, S2 sind in der Fig. 14 (wie bei herkömmlichen Bohrwerkzeugen mit symmetrischer Bohrschneiden-Verteilung) identisch bemessen. Die Spitzenwinkel β₁, β₂ sind dabei so gewählt, dass sich der axiale Höhenversatz ΔH am Werkzeug-Umfang, das heißt an den Schneidenecken 33 der beiden Bohrschneiden S1, S2, bzw. die unterschiedlichen Höhenpositionen H1, H2 der Bohrschneiden S1, S2 einstellen, wie sie in der Figur 16 gezeigt sind.

Um trotz der unterschiedlichen Teilungsabstände eine in etwa gleichmäßige Belastung der Bohrschneiden S1, S2 zu gewährleisten, sind in dem Ausführungsbeispiel der Fig. 15 bis 18 die Bohrschneiden S1, S2 nicht mehr auf gleicher axialer Höhe H positioniert, sondern vielmehr auf unterschiedlichen Höhenpositionen H1 und H2 angeordnet. Diese Höhenpositionen H1 und H2 sind so gewählt, dass sich eine im Vergleich zur Fig. 11 und 12 gleichmäßigere Bohrschneiden-Belastung der beiden Bohrschneiden S1, S2 ergibt. Die Höhenpositionen H1 und H2 sind in Abhängigkeit von den Prozessparametern im Bohrprozess (das heißt Werkzeug-Drehzahl, Werkzeug-Vorschub) sowie in Abhängigkeit von den jeweiligen Teilungsabständen gewählt.

Wie aus der Fig. 16 hervorgeht, sind die Bohrschneiden S1, S2 - analog zur Fig. 9 und 10 - jeweils über identische Schnittbreiten s in Spaneingriff mit der Bohrungs-Innenwandung. Zudem überlappen sich in der Fig. 14 die Schnittwege w₁ und w₂ einander nicht, sondern gehen diese vielmehr überlappungsfrei ineinander über.

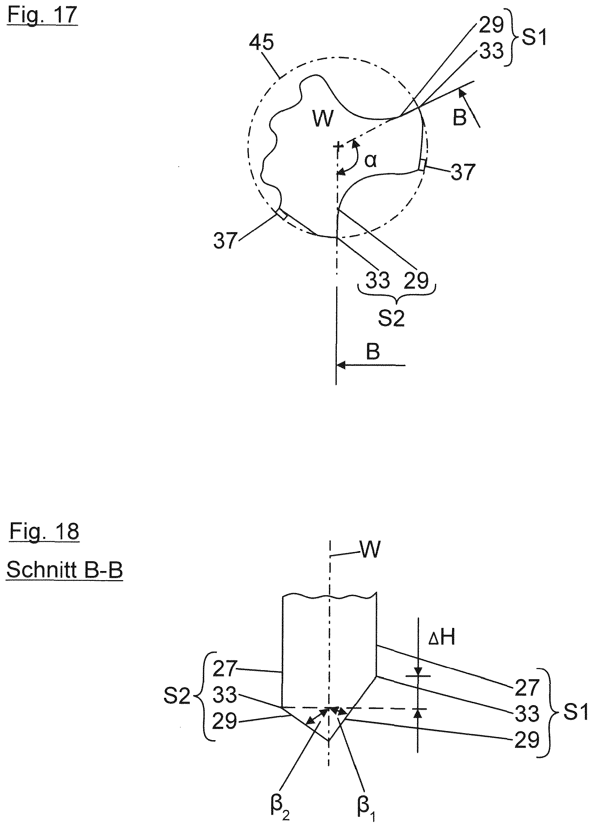

Gemäß den Figuren 17 und 18 spannt jede Querschneidkante 29 jeder Bohrschneide S1, S2 mit der Werkzeugachse W einen Spitzenwinkel β₁, β₂ auf. Die Spitzenwinkel β₁, β₂ der beiden Bohrschneiden S1, S2 sind in der Fig. 18 nicht (wie bei herkömmlichen Bohrwerkzeugen mit symmetrischer Bohrschneiden-Verteilung) identisch bemessen, sondern vielmehr zueinander unterschiedlich bemessen. Die Spitzenwinkel β₁, β₂ sind dabei so gewählt, dass sich der axiale Höhenversatz ΔH am Werkzeug-Umfang, das heißt an den Schneidenecken 33 der beiden Bohrschneiden S1, S2, bzw. die unterschiedlichen Höhenpositionen H1, H2 der Bohrschneiden S1, S2 einstellen, wie sie in der Figur 16 gezeigt sind.

### BEZUGSZEICHENLISTE

- 1: Gewindebohrung
- 3: Bohrungsgrund
- 5: Werkstück
- 7: Gewindesenkung
- 8: Fase
- 9: Innengewinde
- 13: Freigang
- 14: Bohrerstege
- 15: Spanschaft
- 17: Werkzeugkörper
- 14, 16: Bohrstege
- S1, S2: Bohrschneiden
- 23: Spanraum
- 25: Längsschneidkante
- 29: Querschneidkante
- 30: stirnseitige Freifläche
- 33: Schneidenecke
- 35: Bohrersteg-Freifläche
- 37: Führungsfasen
- 38: Drehrichtung im Bohrhub
- 39: Werkzeug-Gewindeerzeugungsabschnitt
- 40, 41, 42: Schneidzähne des Gewindeerzeugungsabschnittes
- 43: alternativer Schneidzahn
- 45: Bohrschneiden-Kreisbahn
- 47: Hüllkurve des Gewindeerzeugungsabschnittes 39
- 49: Werkzeug-Freiraum
- 51: Vorbohrung
- 53: Zirkular-Kreisbahn
- t_{B}: Sollbohrtiefe
- d_{K}: Kerndurchmesser
- u: Werkzeug-Umfangsrichtung
- α: Schneidenwinkel
- A: Bohrungsachse
- W: Werkzeugachse
- B: Bohrhub
- G: Reversier-Gewindehub
- F: Freifahrschnitt
- Δr: Radialversatz
- Δa: Axialversatz
- ΔH: Höhenversatz
- H1, H2: Höhenpositionen
- β₁, β₂: Spitzenwinkel

## Patentansprüche

1. Verfahren zur Erzeugung einer Werkstück-Gewindebohrung (1) mit einem Innengewinde (9),
wobei ein rotierendes Gewindebohr-Werkzeug in einem Bohrhub (B) in das Werkstück (5) bis zu einer Soll-Bohrtiefe (t_{B}) unter Bildung einer Vorbohrung (51) eingetrieben wird und in einem Reversier-Gewindehub (G) mit einem Reversiervorschub und einer damit synchronisierten Drehzahl aus der Vorbohrung (51) unter Bildung des Innengewindes (9) herausgeführt wird,
wobei im Bohrhub (B) das Gewinde-Bohrwerkzeug mit Bezug auf den Reversier-Gewindehub (G) gleichsinnig oder gegensinnig dreht,
wobei das Gewindebohr-Werkzeug einen Bohrabschnitt (S1, S2) aufweist, der im Bohrhub (B) die Vorbohrung (51) erzeugt, und einen Gewindeerzeugungsabschnitt (39) aufweist, der im Reversier-Gewindehub (G) das Innengewinde (9) erzeugt,
wobei im Bohrhub (B) der Werkzeug-Gewindeerzeugungsabschnitt (39) belastungsfrei sowie außer Eingriff mit der Vorbohrungswand bleibt, und im Reversier-Gewindehub (G) der Werkzeug-Bohrabschnitt (S1, S2) belastungsfrei sowie außer Eingriff mit dem erzeugten Innengewinde (9) bleibt,
wobei am Bohrhub-Ende zur Vorbereitung des Reversier-Gewindehubs (G) ein Freifahrschnitt (F) erfolgt, bei dem das um seine Werkzeug-Achse (W) rotierende Gewindebohr-Werkzeug um einen Radialversatz (Δr) radial ausgesteuert wird und in einer Zirkular-Drehbewegung entlang einer Kreisbahn (53) um die Bohrungs-Achse (A) geführt wird, wobei das Gewindebohr-Werkzeug zumindest eine erste Bohrschneide (S1) und eine zweite Bohrschneide (S2) aufweist, die in Werkzeug-Umfangsrichtung (u) um einen Schneidenwinkel (α) voneinander beabstandet sind,
**dadurch gekennzeichnet, dass**
der Schneidenwinkel (α) so bemessen ist, dass die beiden Bohrschneiden (S1, S2) im Reversier-Gewindehub (G) belastungsfrei und außer Eingriff mit dem erzeugten Innengewinde (9) aus der Werkstück-Gewindebohrung (1) herausgeführt werden,
wobei der Werkzeug-Gewindeerzeugungsabschnitt (39) in der Werkzeug-Umfangsrichtung (u) außerhalb des von den beiden Bohrschneiden (S1, S2) aufgespannten Drehwinkelbereiches (α) angeordnet ist, und
wobei im Reversier-Gewindehub (G) die Werkzeug-Rotation und die Werkzeug-Zirkularbewegung sowohl in gleichsinniger Drehbewegung als auch bei gleicher Drehzahl erfolgen.

2. Verfahren nach Anspruch 1, **dadurch gekennzeichnet, dass** sich die ersten und zweiten Bohrschneiden (S1, S2) bei einer Werkzeug-Rotation auf einer gemeinsamen Bohrschneiden-Kreisbahn (45) mit einem Bohrschneiden-Durchmesser bewegen, und dass sich der Werkzeug-Gewindeerzeugungsabschnitt (39) im Bohrhub (B) auf einem Durchmesser bewegt, der kleiner als der Vorbohrungs-Durchmesser ist, und zwar unter Bildung eines radialen Werkzeug-Freiraums (49) zwischen dem Werkzeug-Gewindeerzeugungsabschnitt (39) und der Vorbohrungswand, und dass der Werkzeug-Freiraum (49) beim Freifahrschnitt (F) in Radialrichtung teilweise aufgebraucht wird.

3. Verfahren nach einem der vorhergehenden Ansprüche, **dadurch gekennzeichnet, dass** der Werkzeug-Gewindeerzeugungsabschnitt (39) zumindest einen, insbesondere mehrere Gewindezähne (40, 41, 42) aufweist, und/oder dass jeder Gewindezahn (40, 41, 42) auf einem eigenen Zahnkontur-Durchmesser liegt, wobei deren Unterschied das Aufmaß zwischen zwei nacheinander folgenden Gewindezähne beschreibt, und/oder dass der in der Drehrichtung (38) als letzter Gewindezahn (42) nacheilende Gewindezahn ein Fertigbearbeitungs-Zahn ist, dessen Zahnkontur-Durchmesser größer ist als der Zahnkontur-Durchmesser des vorauseilenden Gewindezahns (41, 42), und/oder dass die Gewindezähne (40, 41, 42) auf einer Hüllkurve (4) liegen.

4. Verfahren nach Anspruch 3, **dadurch gekennzeichnet, dass** der zumindest eine Gewindezahn (40, 41, 42) entweder schneidend oder formend arbeitet, oder dass der zumindest eine Gewindezahn (40, 41, 42) gemischt, das heißt sowohl schneidend als auch formend arbeitet.

5. Verfahren nach einem der vorhergehenden Ansprüche, **dadurch gekennzeichnet, dass** die ersten und zweiten Bohrschneiden (S1, S2) in der Werkzeug-Axialrichtung in unterschiedlichen Höhenpositionen (H1, H2), das heißt zueinander mit axialem Höhenversatz (ΔH), angeordnet sind, und dass insbesondere der axiale Höhenversatz (ΔH) zwischen den Bohrschneiden (S1, S2) derart bemessen ist, dass die Bohrschneiden-Belastungen pro Bohrschneide (S1, S2) im Bohrhub (B) in etwa gleich sind.

6. Verfahren nach einem der vorhergehenden Ansprüche, **dadurch gekennzeichnet, dass** der Werkzeug-Bohrabschnitt (S1, S2) zumindest eine dritte Bohrschneide aufweist, die in der Werkzeug-Umfangsrichtung (u) im Drehwinkelbereich (α) zwischen den beiden ersten und zweiten Bohrschneiden (S1, S2) angeordnet ist.

7. Verfahren nach einem der vorhergehenden Ansprüche, **dadurch gekennzeichnet, dass** jede Bohrschneide (S1, S2) zumindest eine an der Werkzeugspitze ausgebildete stirnseitige Querschneidkante (29) aufweist, und dass die Querschneidkanten (29) beider Bohrschneiden (S1, S2) in der Werkzeug-Axialrichtung zueinander um einen Höhenversatz (ΔH) höhenversetzt sind.

8. Verfahren nach Anspruch 7, **dadurch gekennzeichnet, dass** die Querschneidkante (29) jeder Bohrschneide (S1, S2) an einer radial äußeren Schneidenecke (33) in eine Längsschneidkante (27) übergeht, und/oder dass die Bohrschneiden (S1, S2) jeweils an, in Werkzeug-Längsrichtung verlaufenden Bohrerstegen (14) ausgebildet sind, und dass die Bohrerstege (14) in der Werkzeug-Umfangsrichtung (u) über Spanräume (23) voneinander beabstandet sind, und/oder dass eine den Spanraum (23) begrenzende Spanfläche an der Längsschneidkante (27) in eine umfangsseitige Bohrersteg-Freifläche (35) übergeht, und/oder dass von den umfangsseitigen Bohrersteg-Freiflächen (35) jeweils Führungsfasen (37) abragen, und/oder dass an einer umfangsseitigen Bohrersteg-Freifläche (35) der Werkzeug-Gewindeerzeugungsabschnitt (39) ausgebildet ist.

9. Verfahren nach Anspruch 8, **dadurch gekennzeichnet, dass** die Querschneidkante (29) jeder Bohrschneide (S1, S2) mit der Werkzeugachse (W) einen Spitzenwinkel (β₁, β₂) aufspannt, und dass die Spitzenwinkel (β₁, β₂) der Bohrschneiden (S1, S2) gleich sind, oder dass die Spitzenwinkel (β₁, β₂) der Bohrschneiden (S1, S2) unterschiedlich sind, wodurch sich der axiale Höhenversatz (ΔH) am Werkzeug-Umfang, das heißt an den Schneidenecken (33) der Bohrschneiden (S1, S2), bzw. die unterschiedlichen Höhenpositionen (H1, H2) der Bohrschneiden (S1, S2) ergeben.

10. Verfahren nach Anspruch 9, **dadurch gekennzeichnet, dass** an der Werkzeugspitze eine den Spanraum (23) begrenzende Spanfläche an der stirnseitigen Querschneidkante (29) in eine stirnseitige Freifläche (30) übergeht, die in Richtung auf die Werkzeug-Achse (W) konisch zuläuft.

11. Verfahren nach einem der vorhergehenden Ansprüche, **dadurch gekennzeichnet, dass** zur Vorbereitung des Freifahrschnitts (F) das sich nach dem Bohrhub-Ende auf Soll-Bohrtiefe (t_{B}) befindliche Gewindebohr-Werkzeug um einen Axialversatz (Δa) entgegen der Bohrrichtung zurückgestellt wird, um im Freifahrschnitt (F) eine Kollision der Werkzeugspitze mit dem Bohrungsgrund (3) zu vermeiden.

## Claims

1. A method for producing a workpiece tapped hole (1) with an internal thread (9),
wherein a rotating tapping tool is driven into the workpiece (5) in a drilling stroke (B) up to a desired drilling depth (t_{B}) forming a pilot hole (51), and is guided out of the pilot hole (51) in a reverse drilling stroke (G) with a reverse feed motion and a rotational speed synchronized therewith forming the internal thread (9),
wherein in the drilling stroke (B) the tapping tool rotates in the same direction as or in the opposite direction to the reverse drilling stroke (G), wherein the tapping tool has a drilling portion (S1, S2) that creates the pilot hole (51) in the drilling stroke (B) and has a thread-creating portion (39) that creates the internal thread (9) in the reverse drilling stroke (G),
wherein in the drilling stroke (B) the tool thread-creating portion (39) remains unloaded and not in engagement with the pilot hole wall, and in the reverse drilling stroke (G) the tool drilling portion (S1, S2) remains unloaded and not in engagement with the internal thread (9) created,
wherein at the drilling stroke end for preparing the reverse drilling stroke (G) a free driving cut (F) is made, in which the tapping tool rotating about its tool axis (W) is radially offset by a radial offset (Δr) and is guided in a circular rotational movement along a circular path (53) about the drilling axis (A), wherein the tapping tool has at least one first drilling edge (S1) and one second drilling edge (S2), which are spaced apart from one another by a cutting angle (α) in the tool circumferential direction (u),
**characterized in that** the cutting angle (α) is dimensioned such that the two drilling edges (S1, S2) are guided out of the workpiece tapped hole (1) in the reverse drilling stroke (G) without loading and not in engagement with the created internal thread (9),
wherein the tool thread-creating portion (39) is arranged in the tool circumferential direction (u) outside the rotational angle range (α) spanned by the two drilling edges (S1, S2), and
wherein in the reverse drilling stroke (G) the tool rotation and the tool circular movement take place both in the same direction of rotation and at the same speed.

2. The method according to claim 1, **characterized in that** the first and second drilling edges (S1, S2) move in a tool rotation on a common drilling edge circular path (45) with a drilling edge diameter, and **in that** the tool thread-creating portion (39) moves in the drilling stroke (B) on a diameter which is smaller than the pilot hole diameter, and by forming a radial tool clearance (49) between the tool thread-creating portion (39) and the pilot hole wall, and **in that** the tool clearance (49) is partially used in radial direction during the clearance cut (F).

3. The method according to any one of the preceding claims, **characterized in that** the tool thread-creating portion (39) has at least one, in particular a plurality of threaded teeth (40, 41, 42), and/or **in that** each threaded tooth (40, 41, 42) lies on its own tooth contour diameter, wherein the difference between them describes the allowance between two successive threaded teeth, and/or **in that** the threaded tooth (42) which is the last threaded tooth in the direction of rotation (38) is a finish-machining tooth, whose tooth contour diameter is greater than the tooth contour diameter of the leading threaded tooth (41, 42), and/or **in that** the threaded teeth (40, 41, 42) lie on an envelope curve (4).

4. The method according to claim 3, **characterized in that** the at least one threaded tooth (40, 41, 42) works either by cutting or forming or **in that** the at least one threaded tooth (40, 41, 42) operates in a mixed manner, i.e. both cutting and forming.

5. The method according to any one of the preceding claims, **characterized in that** the first and second drilling edges (S1, S2) are arranged at different height positions (H1, H2) in the tool axial direction, i.e. with an axial height offset (ΔH) relative to one another, and in particular the axial height offset (ΔH) between the drilling edges (S1, S2) is such that the drilling loads for each drilling edge (S1, S2) are approximately equal in the drilling stroke (B).

6. The method according to any one of the preceding claims, **characterized in that** the tool-drilling portion (S1, S2) has at least one third drilling edge which is arranged in the tool circumferential direction (u) in the rotational angle range (α) between the two first and second drilling edges (S1, S2).

7. The method according to any one of the preceding claims, **characterized in that** each drilling edge (S1, S2) has at least one end face transverse cutting edge (29) formed on the tool tip, and **in that** the transverse cutting edges (29) of both drilling edges (S1, S2) are offset in height relative to one another by a height offset (ΔH) in the tool axial direction.

8. The method according to claim 7, **characterized in that** the transverse cutting edge (29) of each drilling edge (S1, S2) merges into a longitudinal cutting edge (27) at a radially outer cutting corner (33), and/or **in that** the drilling edges (S1, S2) are each formed on drill webs (14) extending in the longitudinal direction of the tool, and **in that** the drill webs (14) are spaced apart from one another in the circumferential direction (u) of the tool by tapping spaces (23), and/or **in that** a tapping face delimiting the tapping space (23) merges on the longitudinal cutting edge (27) with a circumferential drill web flank (35), and/or **in that** guide chamfers (37) project respectively from the circumferential drill web flanks (35), and/or **in that** the tool thread-creating portion (39) is formed on a circumferential drill web flank (35).

9. The method according to claim 8, **characterized in that** the transverse cutting edge (29) of each drilling edge (S1, S2) spans a point angle (β₁, β₂) with the tool axis (W), and **in that** the point angles (β₁, β₂) of the drilling edges (S1, S2) are the same, or **in that** the point angles (β₁, β₂) of the drilling edges (S1, S2) are different, whereby the axial height offset (ΔH) at the tool circumference, i.e. at the cutting corners (33) of the drilling edges (S1, S2), or the different height positions (H1, H2) of the cutting edges (S1, S2) are formed.

10. The method according to claim 9, **characterized in that** at the tool tip a tapping face delimiting the tapping space (23) merges at the end face transverse cutting edge (29) with an end face flank (30) which tapers conically in the direction of the tool axis (W).

11. The method according to one of the preceding claims, **characterized in that**, in preparation for the clearance cut (F), the tapping tool, which is located at the set drilling depth (t_{B}) after the end of the drilling stroke, is set back by an axial offset (Δa) against the drilling direction in order to avoid a collision of the tool tip with the bottom of the hole (3) in the clearance cut (F).

## Revendications

1. Procédé de génération d'un trou taraudé dans une pièce (1) avec un filet intérieur (9),
dans lequel un outil de taraudage rotatif est enfoncé dans une course de perçage (B) dans la pièce (5) jusqu'à une profondeur de perçage de consigne(t_{B}) en formant un avant-trou (51) et est retiré de l'avant-trou (51) dans une course de filetage d'inversion (G) avec une avance d'inversion et une vitesse de rotation synchronisée avec celle-ci formant le filet intérieur (9),
dans lequel, dans la course de perçage (B), l'outil de taraudage tourne dans le même sens ou en sens inverse par rapport à la course de filetage d'inversion (G), dans lequel l'outil de taraudage présente une section de perçage (S1, S2) qui génère l'avant-trou (51) dans la course de perçage (B) et présente une section de génération de filet (39) qui génère le filet intérieur (9) dans la course de filetage d'inversion (G),
dans lequel, dans la course de perçage (B), la section de génération de filet d'outil (39) reste sans sollicitation ainsi que hors prise avec la paroi d'avant-trou, et dans la course de filetage d'inversion (G), la section de perçage d'outil (S1, S2) reste sans sollicitation ainsi que hors prise avec le filet intérieur généré (9),
dans lequel une coupe de dégagement (F) est effectuée à la fin de course de perçage pour la préparation de la course de filetage d'inversion (G), lors de laquelle l'outil de taraudage rotatif autour de son axe d'outil (W) est déclaré radialement d'un déport radial (Δr) et est guidé dans un mouvement rotatif circulaire le long d'un chemin circulaire (53) autour de l'axe de perçage (A), dans lequel l'outil de taraudage présente au moins une première lame d'alésoir (S1) et une deuxième lame d'alésoir (S2) qui sont espacées l'une de l'autre d'un angle de lame(α) dans le sens périphérique d'outil (u),
**caractérisé en ce que** l'angle de lame (α) est dimensionné de sorte que les deux lames d'alésoir (S1, S2) soient retirées du trou taraudé dans la pièce (1) dans la course de filetage d'inversion (G) sans sollicitation et hors prise avec le filet intérieur (9) généré,
dans lequel la section de génération de filetage d'outil (39) est agencée dans le sens périphérique d'outil (u) en dehors de la plage d'angle de rotation (α) définie par les deux lames d'alésoir (S1, S2), et
dans lequel, dans la course de filetage d'inversion (G), la rotation d'outil et le mouvement circulaire d'outil sont effectués non seulement dans le mouvement de rotation dans le même sens mais aussi en cas de vitesse de rotation identique.

2. Procédé selon la revendication 1, **caractérisé en ce que** les première et deuxième lames d'alésoir (S1, S2) se déplacent lors d'une rotation d'outil sur un chemin circulaire de lame d'alésoir (45) commun avec un diamètre de lame d'alésoir, et **en ce que** la section de génération de filet d'outil (39) se déplace dans la course de perçage (B) à un diamètre qui est inférieur au diamètre d'avant-trou, et ce en formant un espace libre d'outil (49) radial entre la section de génération de filet d'outil (39) et la paroi d'avant-trou, et **en ce que** l'espace libre d'outil (49) est partiellement utilisé dans le sens radial lors de la coupe de dégagement (F).

3. Procédé selon l'une quelconque des revendications précédentes, **caractérisé en ce que**la section de génération de filet d'outil (39) présente au moins une, en particulier plusieurs dents de filetage (40, 41, 42), et/ou en ce que chaque dent de filetage (40, 41, 42) se trouve sur un diamètre de contour de dent propre, dans lequel la différence entre elles décrit la surépaisseur entre deux dents de filetage se suivant l'une l'autre, et/ou en ce que la dent de filetage qui est la dernière dent de filetage (42) dans le sens de rotation (38) est une dent d'usinage de finition, dont le diamètre de contour de dent est supérieur au diamètre de contour de dent de la dent de filetage précédente (41, 42), et/ou en ce que les dents de filetage (40, 41, 42) se trouvent sur une courbe enveloppante (4).

4. Procédé selon la revendication 3, **caractérisé en ce que** la au moins une dent de filetage (40, 41, 42) découpe ou façonne, ou **en ce que** la au moins une dent de filetage (40, 41, 42) travaille de manière mixte, c'est-à-dire non seulement découpe mais aussi façonne.

5. Procédé selon l'une quelconque des revendications précédentes, **caractérisé en ce que** les première et deuxième lames d'alésoir (S1, S2) sont agencées dans le sens axial d'outil dans différentes positions en hauteur (H1, H2), c'est-à-dire avec un déport en hauteur axial (ΔH) l'une par rapport à l'autre, et **en ce qu'**en particulier le déport en hauteur axial (ΔH) entre les lames d'alésoir (S1, S2) est dimensionné de telle manière que les sollicitations de lames d'alésoir par lame d'alésoir (S1, S2) soient à peu près identiques dans la course de perçage (B).

6. Procédé selon l'une quelconque des revendications précédentes, **caractérisé en ce que** la section de perçage d'outil (S1, S2) présente au moins une troisième lame d'alésoir qui est agencée dans le sens périphérique d'outil (u) dans la plage d'angle de rotation (α) entre les deux première et deuxième lames d'alésoir (S1, S2).

7. Procédé selon l'une quelconque des revendications précédentes, **caractérisé en ce que** chaque lame d'alésoir (S1, S2) présente au moins une arête de coupe transversale (29) côté avant réalisée au niveau de l'embout d'outil, et **en ce que** les arêtes de coupe transversale (29) des deux lames d'alésoir (S1, S2) sont décalées en hauteur les unes par rapport aux autres d'un déport en hauteur (ΔH) dans le sens axial d'outil.

8. Procédé selon la revendication 7, **caractérisé en ce que** l'arête de lame transversale (29) de chaque lame d'alésoir (S1, S2) passe au niveau d'un coin de lame (33) extérieur radialement à une arête de coupe longitudinale (27), et/ou **en ce que** les lames d'alésoir (S1, S2) sont réalisées respectivement au niveau de barrettes de foret (14) s'étendant dans le sens longitudinal d'outil, et **en ce que** les barrettes de foret (14) sont espacées les unes des autres dans le sens périphérique d'outil (u) par le biais d'espaces d'enlèvement (23), et/ou **en ce qu'**une surface d'enlèvement délimitant l'espace d'enlèvement (23) passe au niveau de l'arête de coupe longitudinale (27) à une surface libre de barrette de foret (35) côté périphérie, et/ou **en ce que** respectivement des chanfreins de guidage (37) dépassent des surfaces libres de barrette de foret (35) côté périphérie, et/ou **en ce que** la section de génération de filet d'outil (39) est formée au niveau d'une surface libre de barrette de foret (35) côté périphérie.

9. Procédé selon la revendication 8, **caractérisé en ce que** l'arête de coupe transversale (29) de chaque lame d'alésoir (S1, S2) forme avec l'axe d'outil (W) un angle d'embout (β₁, β₂), et **en ce que** les angles d'embout (β₁, β₂) des lames d'alésoir (S1, S2) sont identiques, ou **en ce que** les angles d'embout (β₁, β₂) des lames d'alésoir (S1, S2) sont différents, moyennant quoi le déport en hauteur axial (ΔH) au niveau de la périphérie d'outil, c'est-à-dire au niveau des coins de lame (33) des lames d'alésoir (S1, S2), ou les différentes positions en hauteur (H1, H2) des lames d'alésoir (S1, S2) sont formées.

10. Procédé selon la revendication 9, **caractérisé en ce qu'une** surface d'enlèvement délimitant l'espace d'enlèvement (23) passe au niveau de l'embout d'outil au niveau de l'arête de coupe transversale (29) en une surface libre côté avant (30) qui se termine de manière conique en direction de l'axe d'outil (W).

11. Procédé selon l'une quelconque des revendications précédentes, **caractérisé en ce que,** pour la préparation de la coupe de dégagement (F), l'outil de taraudage se trouvant après la fin de course de perçage à une profondeur de perçage de consigne (t_{B}) est reculé d'un déport axial (Δa) dans le sens inverse au sens de perçage afin d'empêcher une collision de l'embout d'outil avec le fond de trou (3) dans la coupe de dégagement (F).
